# EUROPÄISCHE PATENTSCHRIFT

(11) **EP 2 181 911 B1**
(45) Veröffentlichungstag und Bekanntmachung des Hinweises auf die Patenterteilung: **18.05.2011**
(21) Anmeldenummer: 09012363.9
(22) Anmeldetag: 30.09.2009
(51) Int. Cl.: B62D 25/04, B21D 28/10, C21D 9/00

(54) **Warmformbauteil und Verfahren zur Herstellung eines Warmformbauteils**
Heat formed component and method for manufacturing same
Pièce formée à chaud et procédé pour sa fabrication

(30) Priorität: 30.10.2008 DE 102008053878
(43) Veröffentlichungstag der Anmeldung: 05.05.2010
(73) Patentinhaber: Benteler Automobiltechnik GmbH, 33102 Paderborn (DE)
(72) Erfinder: Kettler, Markus, 33106 Paderborn (DE)
(74) Vertreter: Ksoll, Peter

(56) Entgegenhaltungen:
- EP-A- 1 253 208
- EP-B- 0 708 014
- WO-A-99/07492
- DE-A- 10 043 880
- DE-A-102004 018 897
- DE-B3-102004 038 626

## Beschreibung

Die Erfindung betrifft einerseits ein Warmformbauteil gemäß den Merkmalen im Oberbegriff des Anspruchs 1.

Andererseits richtet sich die Erfindung auf ein Verfahren zur Herstellung eines Warmformbauteils entsprechend dem Oberbegriff des Anspruchs 2.

Beides ist aus der EP 708014B bekannt.

Im Karosserierohbau ist es in einer Reihe von Fertigungssituationen notwendig, Warmformbauteile aus einem Stahl mit hoher Materialfestigkeit zeitlich begrenzt so mit Anschlussstücken zu koppeln, dass diese Anschlussstücke während der Handhabung der Warmformbauteile im Fertigungsprozess einer Fahrzeugkarosserie verliersicher an den Warmformbauteilen zwischenfixiert sind.

Die Zwischenfixierung der Anschlussstücke erfolgt im Stand der Technik beispielsweise mit Hilfe von Klammern oder auch mittels Verclipsung. Eine weitere Möglichkeit der Zwischenfixierung von Anschlussstücken an Warmformbauteilen ist der Einsatz von biegbaren Laschen. Auf Grund der hohen Materialfestigkeit der Warmformbauteile und der damit verbundenen Schwierigkeit die Laschen zu verbiegen, werden diese Laschen an einem gesonderten Kaltformbauteil vorgesehen. Dieses Kaltformbauteil wird dann mit dem Warmformbauteil beispielsweise mittels Punktschweißen verbunden. Zur Zwischenfixierung der Anschlussstücke an den Warmformbauteilen brauchen die Laschen dann nur noch entsprechend der Konfiguration der Anschlussstücke umgebogen zu werden.

Es liegt auf der Hand, dass auf Grund der zusätzlichen Kaltformbauteile im Fertigungsprozess einer Fahrzeugkarosserie zusätzliche Kosten anfallen, die einerseits aus den Teile- und Werkzeugkosten und andererseits aus Fertigungskosten resultieren. Der Herstellungsaufwand einer Fahrzeugkarosserie wird somit insgesamt erhöht.

Der Erfindung liegt die Aufgabe zu Grunde, ein Warmformbauteil sowie ein Verfahren zur Herstellung eines Warmformbauteils zu schaffen, bei welchen die Kosten zur vorübergehenden Zwischenfixierung von Anschlussstücken an den Warmformbauteilen während des Fertigungsprozesses einer Fahrzeugkarosserie deutlich gesenkt werden können.

Was die Lösung des gegenständlichen Teils dieser Aufgabe anlangt, so wird diese in den Merkmalen des Anspruchs 1 gesehen.

Entsprechend der erfindungsgemäßen Lehre bildet die zur Zwischenfixierung eines Anschlussstücks vorgesehene Lasche nunmehr ein einstückiges Bestandteil des Warmformbauteils. Sie ist zungenartig gestaltet und in einer Aussparung des Warmformbauteils angeordnet. Je nach Gestaltung eines Anschlussstücks genügt - wie vorstehend ausgeführt - eine Lasche. Erfindungsgemäß ist die Lasche aus der Aussparung herausgebogen. Darüber hinaus ist mit Hilfe der Lasche ein Anschlussstück verliersicher an dem Warmformbauteil fixiert.

Grundsätzlich können aber auch zwei oder mehr Laschen an dem jeweiligen Warmformbauteil vorgesehen sein, um ein Anschlussstück während der Handhabung des Warmformbauteils im Fertigungsprozess einer Fahrzeugkarosserie sicher zwischenfixieren zu können. Die Laschen können gemeinsam in einer Ausparung oder jeweils für sich in getrennten Aussparungen angeordnet sein.

Auf Grund der Erfindung entfällt die Bereitstellung eines gesonderten Kaltformbauteils mit zumindest einer Lasche, welches dann mittels beispielsweise Punktschweißung mit dem Warmformbauteil verbunden werden muss. Die Teile- und Werkzeugkosten einerseits sowie die Fertigungskosten andererseits werden merklich gesenkt, so dass der Aufwand insgesamt deutlich reduziert werden kann.

Ein erfindungsgemäßes Warmformbauteil ist beispielsweise die B-Säule einer Fahrzeugkarosserie. Diese B-Säule soll im Verlauf des Fertigungsprozesses der Fahrzeugkarosserie mit einem Anschlussstück in Form einer als schweres Schmiedebauteil gestalteten Scharnierverstärkung verbunden werden. Aus fertigungstechnischen Gründen ist es aber erforderlich, das Anschlussstück schon vorab dem Warmformbauteil lose, jedoch unverlierbar zuzuordnen. Dieses Anschlussstück kann jetzt mit Hilfe mindestens einer an dem Warmformbauteil vorgesehenen Lasche so an dem Warmformbauteil verliersicher fixiert werden, dass eine räumliche Verlagerung des Warmformbauteils während des Fertigungsprozesses zu keinem Verlust des Anschlussstücks führt. Es bleibt in seiner Position und kann nach der endgültigen Lageorientierung des Warmformbauteils in der Fahrzeugkarosserie dann in der vorgesehenen Weise fixiert werden.

Was den verfahrensmäßigen Teil der der Erfindung zu Grunde liegenden Aufgabe anlangt, so besteht die Lösung in den Merkmalen des Anspruchs 2.

Dementsprechend wird in einem Warmformprozess eine aus einem Stahl mit hoher Materialfestigkeit bestehende Platine zu einem Warmformbauteil umgeformt und bereits während dieses Warmformprozesses mit mindestens einer Aussparung sowie wenigstens einer in der Aussparung liegenden zungenartigen Lasche versehen. Hierbei kann jede Lasche so gestaltet sein, dass sie zur Fixierung eines Anschlussstücks nicht mehr gebogen werden muss. Das Anschlussstück braucht nur eingehängt zu werden.

Erfindungsgemäß wird die Lasche nicht während des Warmformprozesses aus der Ebene der Aussparung herausgedrückt oder herausgebogen, sondern erst in einem separaten Fertigungsschritt. Dieses Herausbiegen der Laschen kann insbesondere auch am erkalteten Bauteil durchgeführt werden, selbst wenn dieses schon gehärtet, gelasert oder sandgestrahlt/oberflächenbehandelt ist. Eine begrenzte Umformung ist auch bei gehärteten Bauteilen noch relativ einfach möglich. Es ist natürlich auch denkbar, dass das Warmformbauteil nur partiell vergütet/gehärtet wird, wobei der Bereich der Lasche ausgespart wird, um eine nachträgliche Kaltumformung nicht zu erschweren.

Bevorzugt ist die Lasche so vorgeformt, dass sie unter Zwischenfixierung des Anschlussstücks anschließend problemlos umgebogen werden kann.

Der Fertigungsprozess des Warmformbauteils mit mindestens einer Lasche ist mithin so abgestimmt, dass auf Grund wenigstens einer Aussparung gezielt ein Freischnitt in das Warmformbauteil eingebracht wird, der eine Geometrie aufweist, welche zunächst eine problemlose Anordnung der Lasche und dann auch deren Verbiegung zur Fixierung eines Anschlussstücks ermöglicht, wenn dies notwendig sein sollte.

Mit Hilfe des erfindungsgemäßen Verfahrens ist also eine signifikante Kostenreduktion gewährleistet, wobei kein Extrabauteil mehr bereit gestellt werden muss, das dann zusätzlich, beispielsweise durch Punktschweißen, mit dem Warmformbauteil verbunden werden muss.

Die Erfindung ist nachfolgend anhand eines in den Zeichnungen dargestellten Ausführungsbeispiels näher erläutert. Es zeigen:
- Figur 1: in schematischer Perspektive einen Längenabschnitt einer B- Säule für eine Fahrzeugkarosserie;
- Figur 2: einen vertikalen Längsschnitt durch die Darstellung der Figur 1 entlang der abgewinkelten Linie II - II in Richtung der Pfeile IIa gesehen und
- Figur 3: in schematischer Perspektive ein Anschlussstück in Form einer Scharnierverstärkung.

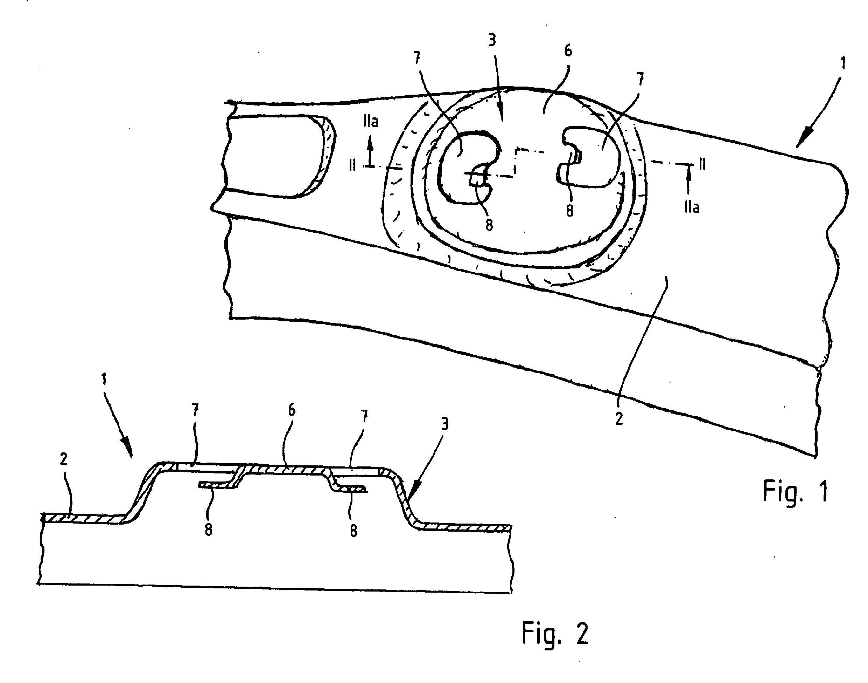

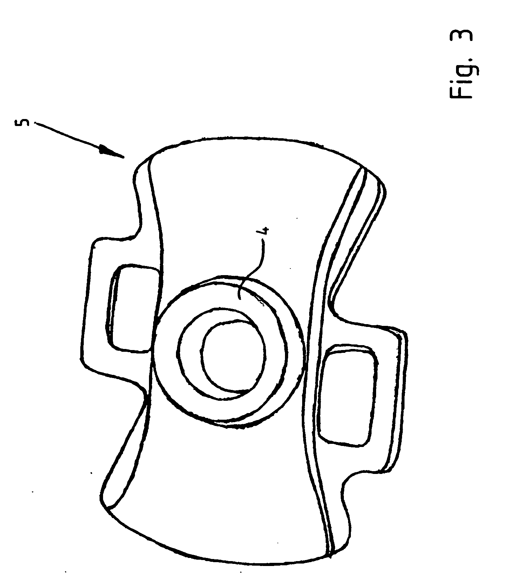

Mit 1 ist in den Figuren 1 und 2 ein Warmformbauteil in Form einer im Querschnitt U-förmigen B-Säule einer ansonsten nicht näher veranschaulichten Fahrzeugkarosserie bezeichnet. Im dargestellten Längenabschnitt weist das Warmformbauteil im Steg 2 eine napfartige Ausprägung 3 auf, welche einen Stutzen 4 eines in der Figur 3 erkennbaren Anschlussstücks 5 in Form einer aus einem schweren Schmiedestück bestehenden Scharnienrerstärkung aufnehmen soll.

Um dieses Anschlussstück 5 bei der Handhabung des Warmformbauteils 1 während des Fertigungsprozesses einer Fahrzeugkarosserie lose aber dennoch sicher an dem Warmformbauteil 1 befestigen zu können, sind in der Stirnfläche 6 der Ausprägung 3 zwei Aussparungen 7 vorgesehen, in welche zwei mit dem Warmformbauteil 1 einstückig verbundene zungenartige Laschen 8 fassen. Die Aussparungen 7 und die Laschen 8 sind beim Warmformprozess des Warmformbauteils 1 direkt mit hergestellt worden. Mit Hilfe dieser biegbaren Laschen 8 kann das Anschlussstück 5 so lange sicher lose an dem Warmformbauteil 1 befestigt werden, wie es während des Fertigungsprozesses der Fahrzeugkarosserie erforderlich ist. Das heißt, das Warmformbauteil 1 kann während des Fertigungsprozesses beliebig räumlich verlagert werden, ohne dass das Anschlussstück 5 von dem Warmformbauteil getrennt wird.

### Bezugszeichen:

- 1 -: Warmformbauteil
- 2 -: Steg v. 1
- 3 -: Ausprägung in 2
- 4 -: Stutzen v. 5
- 5 -: Anschlussstück
- 6 -: Stirnfläche v. 3
- 7 -: Aussparungen in 6
- 8 -: Laschen in 7

## Patentansprüche

1. Warmformbauteil (1) aus einem Stahl mit hoher Materialfestigkeit, umfassend eine Aussparung (7) und eine in der Aussparung (7) angeordnete Lasche (8), wobei die Lasche (8) zungenartig gestaltet ist und einen einstückigen Bestandteil des Warmformteils (1) bildet, **dadurch gekennzeichnet, dass** die Lasche (8) aus der Aussparung (7) herausgebogen ist und ein Anschlussstück (5) mit Hilfe der Lasche (8) verliersicher an dem Warmformbauteil (1) fixiert ist.

2. Verfahren zur Herstellung eines Warmformbauteils (1) nach Anspruch 1, wobei in einem Warmformprozess eine Platine aus einem Stahl mit hoher Materialfestigkeit zum Warmformbauteil (1) umgeformt und dieses hierbei mit mindestens einer Aussparung (7) sowie wenigstens einer in der Aussparung (7) liegenden zungenartigen Lasche (8) versehen wird **dadurch gekennzeichnet, dass** die Lasche (8) in einem von dem Warmformprozess unabhängigen, späteren Fertigungsschritt umgeformt und aus der Aussparung (7) herausgebogen wird, wobei ein Anschlussstück (5) mit Hilfe der Lasche (8) verliersicher an dem Warmformbauteil (1) fixiert wird.

3. Verfahren nach Anspruch 2, **dadurch gekennzeichnet, dass** das Warmformbauteil (1) partiell vergütet wird, wobei die Lasche (8) in einem unvergüteten Bereich liegt.

## Claims

1. Hot-formed component (1) made of a steel with high material strength, comprising a cutout (7) and a tab (8) arranged in the cutout (7), wherein the tab (8) is configured in a tongue-like manner and forms an integral part of the hot-formed component (1), **characterised in that** the tab (8) is bent out of the cutout (7) and a connecting piece (5) is securely attached to the hot-formed component (1) by means of the tab (8).

2. Method for producing a hot-formed component (1) according to claim 1, wherein, in a hot-forming process, a plate made of a steel with high material strength is shaped to form the hot-formed component (1) and in doing so the latter is provided with at least one cutout (7) and at least one tongue-like tab (8) located in the cutout (7), **characterised in that** the tab (8) is shaped in a subsequent manufacturing step separate from the hot-forming process and is bent out of the cutout (7), wherein a connecting piece (5) is securely attached to the hot-formed component (1) by means of the tab (8).

3. Method according to claim 2, **characterised in that** the hot-formed component (1) is partially tempered, the tab (8) being located in a non-tempered region.

## Revendications

1. Composant formé à chaud (1) en un acier présentant une haute solidité matérielle, comportant un évidement (7) et une patte (8) agencée dans l'évidement (7), ladite patte (8) étant conçue en forme de languette et formant une partie constitutive d'une seule pièce du composant formé à chaud (1), **caractérisé en ce que** la patte (8) est cintrée hors de l'évidement (7) et une pièce de raccordement (5) est fixée sur le composant formé à chaud (1) de manière imperdable à l'aide de la patte (8).

2. Procédé pour la fabrication d'un composant formé à chaud (1) selon la revendication 1, dans lequel, dans un processus de formage à chaud, on transforme une platine en un acier présentant une haute solidité matérielle pour donner le composant formé à chaud (1), et celui-ci est ici pourvu d'au moins un évidement (7) et d'au moins une patte (8) en forme de languette disposée dans l'évidement (7), **caractérisé en ce que** la patte (8) est transformée dans une étape de fabrication ultérieure indépendante du processus de formage à chaud et cintrée hors de l'évidement (7), et une pièce de raccordement (5) est fixée sur le composant formé à chaud (1) de manière imperdable à l'aide de la patte (8).

3. Procédé selon la revendication 2, **caractérisé en ce que** le composant formé à chaud (1) est partiellement traité, ladite patte (8) étant située dans une zone non traitée.
